Europäisches Patentamt

European Patent Office

Office européen des brevets

(19)

(11) Numéro de publication: **0 251 919 B1**

# FASCICULE DE BREVET EUROPEEN

(12)

(45) Date de publication de fascicule du brevet:
20.03.91

(51) Int. Cl.⁵: **H02K 49/04, A63B 21/00**

(21) Numéro de dépôt: **87401497.0**

(22) Date de dépôt: **30.06.87**

(54) Ralentisseur électrique de faible puissance, notamment pout home-trainer.

(30) Priorité: **04.07.86 FR 8609776**

(43) Date de publication de la demande:
**07.01.88 Bulletin 88/01**

(45) Mention de la délivrance du brevet:
**20.03.91 Bulletin 91/12**

(84) Etats contractants désignés:
**AT BE CH DE ES GB GR IT LI NL SE**

(56) Documents cités:
**EP-A- 0 176 962**
**DE-C- 325 364**
**GB-A- 1 279 201**

**PATENT ABSTRACTS OF JAPAN, vol. 9, no.
23 (E-293)[1746], 30 janvier 1985; & JP-A-59
169 358 (TOSHIBA K.K.) 25-09-1984**

(73) Titulaire: **LABAVIA S.G.E.**
**5, avenue Newton Parc d'Activités**
**F-78391 Montigny le Bretonneux(FR)**

(72) Inventeur: **Charbonnier, Marc**
**25, rue Jean Lurçat**
**F-95130 Franconville(FR)**

(74) Mandataire: **Behaghel, Pierre et al**
**CABINET PLASSERAUD 84 rue d'Amsterdam**
**F-75009 Paris(FR)**

## Description

L'invention est relative aux ralentisseurs électriques ou "à courants de Foucault" de faible puissance, c'est-à-dire développant un couple ralentisseur modéré.

Elle concerne plus particulièrement, par ce que c'est dans leur cas que son application semble devoir offrir le plus d'intérêt, mais non exclusivement, parmi ces ralentisseurs, ceux qui équipent les home-trainers, c'est-à-dire les cycles fixes destinés a la musculation.

On rappelle que ces cycles comprennent un cadre portant une selle, un pédalier, une roue entraînée par les rotations de ce pédalier, généralement par l'intermédiaire d'une chaîne coopérant avec le plateau denté du pédalier et avec un pignon lié angulairement à la roue, et des moyens pour freiner cette roue.

Ces moyens travaillent en général par friction et comprennent alors un patin ou galet appliqué avec une force réglable contre une portion appropriée de la roue telle que sa jante ou son pneumatique.

De tels moyens présentent l'inconvénient d'une usure relativement rapide et d'un réglage difficile et peu fiable.

Pour écarter ces inconvénients, il a déjà été proposé de constituer les moyens de freinage par un petit ralentisseur à courants de Foucault.

L'invention a pour but, surtout, de proposer pour de tels petits ralentisseurs une construction particulièrement robuste et économique et se prêtant à des montages et démontages faciles.

A cet effet, les ralentisseurs du genre en question selon l'invention comprennent, d'une façon connue en soi (voir le document FR-A-1 102 524), un rotor induit composé de deux disques parallèles en matériau magnétique solidaires d'un même arbre lui-même monté sur une ossature appropriée par l'intermédiaire de roulements et un stator inducteur comprenant un nombre pair de noyaux en matériau magnétique cylindriques ou prismatiques dont les génératrices sont parallèles à l'axe du ralentisseur, lesdits noyaux étant propres à former en regard de chacun des deux disques une suite de pôles magnétiques dont les polarités sont opposées de proche en proche, les axes des deux noyaux de chaque paire de noyaux consécutifs étant compris dans deux plans passant par l'axe du ralentisseur et formant entre eux un angle compris entre 45 et 90˚, limites incluses, et ils sont caractérisés en ce que le nombre des paires de noyaux compris par leur stator inducteur est égal à 1 et en ce que ce stator est agencé de manière à pouvoir être monté radialement de façon amovible entre les deux disques rotoriques.

Dans des modes de réalisation avantageux, on a recours en outre à l'une et/ou à l'autre des dispositions suivantes :

- seul l'un des deux noyaux de la paire unique de noyaux est entouré d'une bobine de fil électrique,
- chacun des deux noyaux traverse le fond plat d'une cuvette rigide en matériau amagnétique et comporte, rapportée sur l'une de ses extrémités, une plaquette débordante ou épanouissement polaire appliquée contre la face extérieure dudit fond,
- dans un ralentisseur selon l'alinéa précédent, le montage de chaque noyau entouré d'une bobine sur le fond de la cuvette est complété par collage de la bobine de fil sur la portion, de ce noyau, intérieure à la cuvette,
- dans un ralentisseur selon au moins les deux alinéas qui précèdent le précédent, le montage de chaque noyau non entouré de bobine sur le fond de la cuvette est complété par mis en place d'un circlips dans une gorge de ce noyau,
- le bord, de la cuvette, rabattu perpendiculairement à son fond, présente deux tronçons parallèles suffisamment éloignés l'un de l'autre pour permettre la fixation de cette cuvette sur respectivement deux éléments rigides faisant partie de l'ossature et encadrant avec jeu les deux disques,
- les tronçons de fixation de la cuvette selon l'alinéa précédent sont évidés par des trous oblongs allongés parallèlement à l'axe du ralentisseur et permettant de régler les entrefers lors du montage de la cuvette sur l'ossature,
- la cuvette présente la forme générale d'un plat à barbe,
- les deux disques sont reliés entre eux par vissage d'écrous sur des tirants filetés qui les traversent, vissage qui applique axialement chacun de ces disques contre un épaulement de l'arbre ou contre une tranche terminale d'une bague entourant jointivement cet arbre,
- les tirants filetés traversent une poulie coaxiale aux deux disques et propre à recevoir une courroie pour la transmission du couple ralentisseur à un autre organe rotatif lui-même lié angulairement de préférence au pédalier d'un home-trainer, ladite poulie étant de préférence disposée axialement entre les deux disques,
- les tirants filetés traversent une collerette solidaire angulairement d'un rouleau propre à supporter la roue d'un cycle home-trainer.

L'invention vise également les home-trainers équipés des ralentisseurs de faible puissance décrits ci-dessus et spécialement agencés à cet effet.

Elle comprend, mises à part les dispositions principales ci-dessus énoncées, certaines autres dispositions qui s'utilisent de préférence en même temps et dont il sera plus explicitement question ci-après.

Dans ce qui suit, l'on va décrire quelques modes de réalisation préférés de l'invention en se référant aux dessins ci-annexés d'une manière bien entendu non limitative.

Les figures 1, 2 et 3, ce des dessins, montrent respectivement en coupe axiale selon I-I, figure 2, en vue en bout selon la flèche II de la figure 1 et en coupe selon III-III, figure 2, un ralentisseur électrique établi selon l'invention.

La figure 4 montre en vue perspective schématique un home-trainer équipé d'un tel ralentisseur.

Les figures 5 et 6 montrent schématiquement une partie d'un autre home-trainer équipé d'un autre ralentisseur également conforme à l'invention, respectivement en élévation latérale et en plan.

La figure 7 est une coupe axiale de ce dernier ralentisseur et d'une portion de l'appareil équipé par celui-ci.

Les ralentisseurs ici considérés sont de préférence destinés à l'équipement des home-trainers, c'est-à-dire des cycles "fixes" servant à la musculation de leurs usagers.

Dans ces appareils, une résistance réglable à volonté est opposée à l'effort de pédalage exercé par les usagers.

Ces résistances peuvent être réglées entre une valeur faible correspondant à l'entraînement normal d'une bicyclette non chargée sur un sol dur, lisse et horizontal et une valeur élevée correspondant à un entraînement de bicyclette dans des conditions difficiles telles que par exemple la montée d'une forte côte, la circulation sur un sol sableux et ou l'application d'une lourde charge.

La conception d'un tel ralentisseur est fondamentalement différente de celle des ralentisseurs habituellement utilisés pour freiner les véhicules poids-lourds.

Pour ces derniers, d'une part la masse à entraîner en rotation doit être la plus faible possible et, d'autre part, le couple de ralentissement engendré pour un poids donné doit être le plus élevé possible, la puissance de freinage étant souvent supérieure à 100 kW.

Dans le cas présent, au contraire, le poids de la masse rotative du ralentisseur peut être relativement élevé et le couple de ralentissement maximum doit demeurer modéré, la puissance de freinage variant par exemple de 10 W à 1 kW.

L'observation simultanée de ces deux critères permet :

- d'une part d'utiliser comme rotor induit l'ensemble de deux disques parallèles relativement pesants en matériau magnétique,

- et d'autre part d'utiliser une portion seulement de l'étendue circonférentielle de ces disques pour la création des courants de Foucault, ladite portion étant par exemple comprise entre le quart et la moitié de ladite étendue.

Cette dernière caractéristique est tout à fait inhabituelle dans le domaine considéré car en général on cherche au contraire à exploiter pour la création des courants de Foucault la totalité de l'étendue de chaque disque.

Elle permet en outre de monter de façon radialement amovible le stator inducteur entre les deux disques et d'adopter pour l'ensemble une construction extrêmement simple et robuste.

Les deux disques parallèles constitutifs du rotor induit, d'axe X, sont visibles en 1 sur les dessins.

Ils sont traversés jointivement par un arbre 2 d'axe X lui-même monté rotatif sur l'ossature de support 3 du ralentisseur par l'intermédiaire de roulements 4, notamment du type à butée axiale, permettant un bon positionnement axial relatif.

Les disques 1 sont également traversés par des tirants filetés 5 coopérant avec des écrous 6 de façon telle que le vissage de ces écrous ait pour effet d'appliquer axialement les deux disques contre des épaulements 7 de l'arbre 2 ou contre les tranches terminales d'une bague entretoise entourant jointivement cet arbre et calée axialement sur celui-ci.

Le stator inducteur comprend une cuvette C constituée en un matériau amagnétique tel que l'acier inoxydable, cuvette présentant un fond plat 8 et des rebords 9 perpendiculaires à ce fond.

Le fond 8 est prévu de façon à recouvrir une plage d'étendue angulaire A supérieure à 90$^{\circ}$ de la zone périphérique de chaque disque, zone délimitée extérieurement par la tranche extérieure circulaire du disque, de diamètre D et intérieurement par le cercle de diamètre D 2.

Au-delà de sa portion recouvrant la plage ainsi définie de chaque disque, le fond 8 s'etend. de part et d'autre de cette portion selon la direction perpendiculaire à l'axe de symétrie S de ladite plage, de façon telle que le rebord 9 présente deux tronçons terminaux 10 plats et parallèles dont les plans moyens encadrent avec jeu les deux disques.

De ce fait, la cuvette C peut être fixée sur deux éléments rigides 11, droits et parallèles, de l'ossature 3, éléments qui encadrent l'ensemble du ralentisseur sans entraver la rotation des disques.

Dans le mode de réalisation illustré, l'étendue angulaire A n'est qu'un peu supérieure à 90$^{\circ}$ et le fond 8 est étroit et allongé.

En outre la portion, dudit fond 8, la plus proche de l'axe X du rotor, est ici échancrée selon un arc de cercle centré sur cet axe, ce qui donne à ce fond 8 la forme générale d'un C ouvert et épais et, à la cuvette, la forme générale d'un plat à barbe.

Sur le fond 8 sont montés deux noyaux en matériau magnétique 12 et 13 présentant la forme d'un cylindre ou prisme dont les génératrices sont parallèles à l'axe X.

Chacun de ces deux noyaux traverse une ouverture 14,15 évidée dans le fond 8.

Une plaque débordante ou épanouissement polaire 16,17 rapportée sur une extrémité axiale de chaque noyau, notamment par vissage, est appliquée jointivement contre la face extérieure du bord de l'ouverture 14,15 correspondante.

La portion, du premier noyau 12, intérieure à la cuvette, est entourée jointivement d'une bobine de fil électrique 18.

Cette bobine 18 est collée sur ledit noyau à proximité immédiate du fond 8 de la cuvette, ce qui rend irréversible le montage du noyau sur la cuvette.

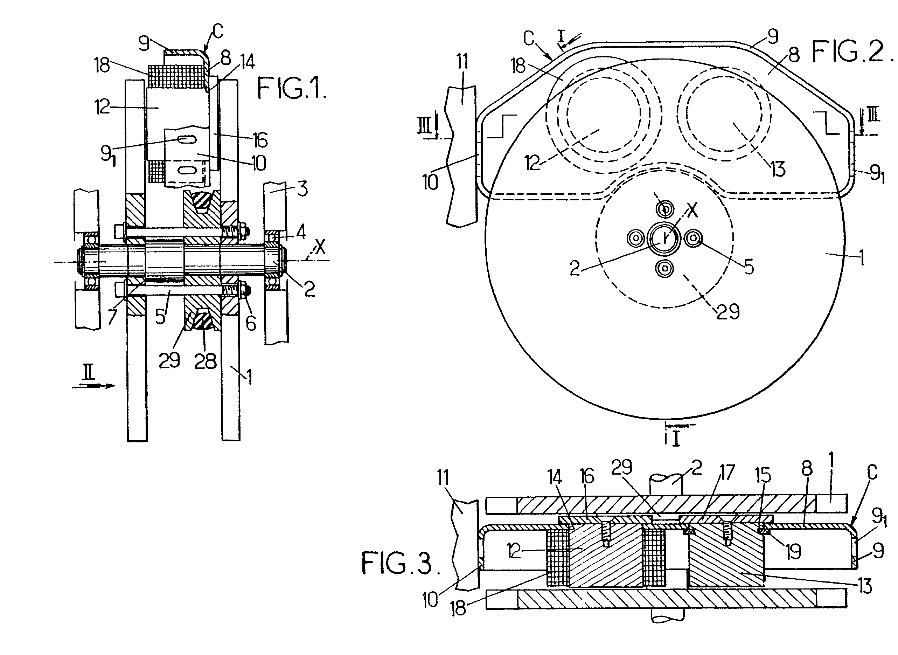

Le montage du second noyau 13 sur ladite cuvette est, quant à lui, rendu irréversible par mise en place d'un circlips 19 (figure 3) dans une gorge évidée dans ce dernier noyau à proximité immédiate de la face intérieure du fond de la cuvette.

Les différents noyaux 12 et 13 ainsi que les épanouissements polaires 16 et 17 sont dimensionnés de façon à définir des plages planes transversales disposées en regard des disques, à une petite distance e de ces disques constituant "entrefer".

Ce sont ces plages qui forment les pôles magnétiques à polarités alternées du stator lorsqu'un courant électrique est envoyé dans la bobine 18, le flux magnétique engendré par ce courant circulant alors successivement, axialement dans le premier noyau 12, circonférentiellement dans l'un des deux disques 2, axialement en sens inverse du précédent dans le second noyau 13 et enfin circonférentiellement en sens inverse du précédent dans le second disque 2 pour rentrer ensuite à nouveau dans le premier noyau 12 : les courants de Foucault générateurs du freinage des disques 1 sont créés par la variation de flux magnétique engendrée dans ces disques du fait de la simple rotation de chacun de ces disques en regard de deux pôles fixes de polarités opposées.

Des lumières 19 destinées à recevoir des systèmes boulons-écrous de fixation de la cuvette statorique sur les éléments 11 sont allongées parallèlement à l'axe X pour permettre un réglage précis des entrefers lors du vissage desdits systèmes.

Dans les réalisations illustrées, les dimensions et emplacements respectifs des deux noyaux 12 et 13 entre les disques 2 sont ceux qui correspondraient à deux des six noyaux compris par un ralentisseur classique à six pôles régulièrement répartis autour de l'axe X.

En d'autres termes, les axes ce des deux noyaux se trouvent respectivement dans deux plans passant par l'axe X et formant entre eux un angle de 60°.

Il en résulte que l'on exploite ici, pour la création des courants de Foucault dans les disques 2, le tiers seulement de la masse de chaque disque habituellement exploitée à cet effet.

Il est à noter en outre que seul l'un des deux noyaux 12 et 13 est ici entouré d'une bobine 18, ce qui réduit encore l'intensité des courants de Foucault engendrée par un tel appareil par rapport aux ralentisseurs comparables classiques.

Comme exposé ci-dessus, la valeur relativement faible du couple ralentisseur qui résulte de ces circonstances ne constitue pas ici un véritable inconvénient vu que l'on ne désire pas engendrer de couple de ralentissement élevé.

Le stator constitué par la cuvette et par les noyaux qu'elle porte peut être monté de façon amovible entre les deux disques 1 selon une direction radiale par rapport à l'axe X, c'est-à-dire sans aucun démontage de ces disques, ce qui est tout à fait inhabituel dans le domaine des ralentisseurs électriques à deux disques et simplifie notablement les réparations et entretiens.

Comme exposé plus haut, une application préférée des ralentisseurs de faible puissance décrits ci-dessus est l'équipement des home-trainers.

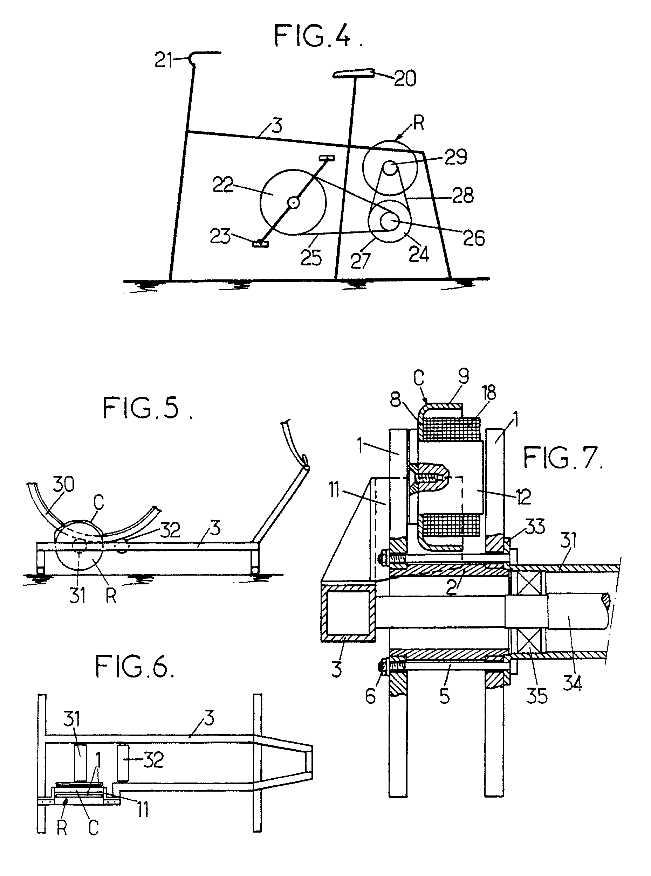

Deux applications de ce genre sont illustrées par les figures 4 à 7, où le ralentisseur est symbolisé par la référence R.

Dans la première application, schématisée sur la figure 4, l'ossature fixe 3 du home-trainer comprend une selle 20, un guidon 21, un pédalier composé d'un plateau denté 22 et de deux pédales 23, et une roue 24 rendue angulairement solidaire du plateau 22 par l'intermédiaire d'une chaîne 25 coopérant d'une part avec le plateau 22 et d'autre part avec un pignon 26 angulairement solidaire de la roue 24.

Cette roue 24 est délimitée extérieurement par une jante 27 présentant une gorge dans laquelle est logée une courroie trapézoïdale 28 coopérant avec une petite poulie 29 solidaire des disques 1 du ralentisseur R.

Comme visible sur les figures 1 à 3, cette petite poulie 29 est avantageusement logée entre les deux disques 1 : elle est alors avantageusement traversée elle-même par les tirants 5.

Elle peut être juxtaposée axialement entre l'un des épaulements 7 de l'arbre 2 et l'un des deux disques 1, comme illustré, mais elle pourrait également être disposée axialement à mi-distance entre les deux disques 1, des bagues d'écartement appropriées étant alors interposées axialement entre cette poulie et chacun de ces deux disques.

Comme bien visible sur la figure 2, l'échancrure prévue dans la cuvette statorique du côté de l'axe X est prévue de façon à entourer avec jeu ladite poulie 29.

Dans la seconde application faisant l'objet des figures 5 à 7, le home-trainer est essentiellement constitué par une bicyclette partielle dont la roue arrière 30 repose sur deux rouleaux horizontaux 31,32 d'axes transversaux parallèles.

Le rotor (1,2,5,6) du ralentisseur R est alors solidaire angulairement de l'un 31 de ces deux rouleaux.

A cet effet, par exemple, les tirants 5 ci-dessus traversent non seulement les deux disques 1, mais aussi une collerette 33 rabattue radialement à partir d'une extrémité axiale du rouleau 31 considéré.

Comme visible sur la figure 7, le rouleau 31 en question est monté sur une barre intérieure 34 solidaire de l'ossature 3 par l'intermédiaire de rouleaux 35.

En suite de quoi, et quel que soit le mode de réalisation adopté, on dispose finalement d'un ralentisseur de faible puissance dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment celles où les deux noyaux 12,13 en matériau magnétique composant le stator inducteur seraient entourés de bobines de fil électrique.

## Revendications

1. Ralentisseur électrique de faible puissance comprenant un rotor induit composé de deux disques parallèles en matériau magnétique (1) solidaires d'un même arbre (2) lui-même monté sur une ossature appropriée par l'intermédiaire de roulements (4,35) et un stator inducteur comprenant un nombre pair de noyaux en matériau magnétique cylindriques ou prismatiques (12,13) dont les génératrices sont parallèles à l'axe du ralentisseur, lesdits noyaux étant disposés et associés à des moyens d'excitation électrique de façon à former en regard de chacun des deux disques une suite de pôles électromagnétiques dont les polarités sont opposées de proche en proche, les axes des deux noyaux de chaque paire de noyaux consécutifs étant compris dans deux plans passant par l'axe du ralentisseur et formant entre eux un angle compris entre 45 et 90°, limites incluses, caractérisé en ce que le nombre des paires de noyaux (12,13) compris par son stator inducteur est égal à 1 et en ce que ce stator est agencé de manière à pouvoir être monté radialement de façon amovible entre les deux disques rotoriques (1).

2. Ralentisseur selon la revendication 1, caractérisé en ce que seul l'un (12) des deux noyaux est entouré d'une bobine (18) de fil électrique.

3. Ralentisseur selon l'une quelconque des revendications 1 et 2, caractérisé en ce que chacun des deux noyaux (12,13) traverse le fond plat (8) d'une cuvette rigide (C) en matériau amagnétique et comporte, rapportée sur l'une de ses extrémités, une plaquette débordante (16,17) appliquée contre la face extérieure dudit fond.

4. Ralentisseur selon la revendication 3, caractérisé en ce que le montage de chaque noyau (12) entouré d'une bobine sur le fond (8) de la cuvette (C) est complété par collage de la bobine de fil (18) sur la portion, de ce noyau, intérieure à la cuvette.

5. Ralentisseur selon les revendications 2 et 3, caractérisé en ce que le montage de chaque noyau (13) non entouré d'une bobine sur le fond (8) de la cuvette est achevé par mise en place d'un circlips (19) dans une gorge de ce noyau.

6. Ralentisseur selon l'une quelconque des revendications 3 à 5, caractérisé en ce que le bord (9), de la cuvette (C), rabattu perpendiculairement à son fond, présente deux tronçons parallèles (10) suffisamment éloignés l'un de l'autre pour permettre la fixation de cette cuvette sur respectivement deux éléments rigides (11) faisant partie de l'ossature (3) et encadrant avec jeu les deux disques (1).

7. Ralentisseur selon la revendication 6, caractérisé en ce que les tronçons de fixation (11) de la cuvette (C) sont évidés par des trous oblongs ($9_1$) allongés parallèlement à l'axe du ralentisseur et permettant de régler les entrefers lors du montage de la cuvette sur l'ossature (3).

8. Ralentisseur selon l'une quelconque des revendications 3 à 7, caractérisé en ce que la cuvette (C) présente la forme générale d'un plat à barbe.

9. Ralentisseur selon l'une quelconque des précédentes revendications, caractérisé en ce que les deux disques (1) sont reliés entre eux par vissage d'écrous sur des tirants filetés (5) qui les traversent, vissage qui applique axialement chacun de ces disques contre un épaulement de l'arbre ou contre une tranche terminale d'une bague entourant jointivement cet arbre.

10. Ralentisseur selon la revendication 9, caractérisé en ce que les tirants filetés traversent une poulie (29) coaxiale aux deux disques (1) et propre à recevoir une courroie (28) pour la transmission du couple ralentisseur à un autre organe rotatif lui-même lié angulairement de préférence au pédalier (22,23) d'un home-trainer, ladite poulie étant de préférence disposée axialement entre les deux disques.

11. Ralentisseur selon la revendication 9, caractérisé en ce que les tirants filetés (5) traversent une collerette (33) solidaire angulairement d'un rouleau (31) propre à supporter la roue (30) d'un cycle home-trainer.

12. Home-trainer, caractérisé en ce qu'il est équipé d'un ralentisseur de faible puissance selon l'une quelconque des précédentes revendications.

## Claims

1. Electric retarder of low power comprising an armature rotor composed of two parallel discs (1) of magnetic material fast to a same shaft (2) itself mounted on a suitable frame through bearings (4,35) and an inductor stator comprising an even number of cylindrical or prismatic cores (12,13) of magnetic material whose generators are parallel with the axis of the retarder, said cores being adapted and associated to electric excitation means so as to form opposite each of the two discs a sequence of electromagnetic poles whose polarities are alternately opposed, the axes of the two cores of each pair of consecutive cores being comprised in two planes passing through the axis of the retarder and forming between themselves an angle comprised between 45 and 90°, limits included, characterized in that the number of pairs of cores (12,13) comprised by its inductor stator is equal to 1 and in that said stator is arranged so as to be radially mountable removably between the two rotor discs (1).

2. Retarder according to claim 1, characterized in that only one (12) of the two cores is surrounded by a coil (18) of electric wire.

3. Retarder according to any one of claims 1 and 2, characterized in that each of the two cores (12,13) passes through the flat bottom (8) of a rigid dish (C) of amagnetic material and comprises, attached to one of its ends, an overlapping plate (16,17) applied against the outer surface of said bottom.

4. Retarder according to claim 3, characterized in that the mounting of each core (12) surrounded by a coil on the bottom (8) of the dish (C) is completed by gluing the wire coil (18) to the portion, of this core, within the dish.

5. Retarder according to claims 2 and 3, characterized in that the mounting of each core (13) not surrounded by a coil on the bottom (8) of the dish is effected by positioning a circlip (19) in a groove of said core.

6. Retarder according to any one of claims 3 to 5, characterized in that the edge (9), of the dish (C), turned back perpendicularly to its bottom, has two parallel sections (10) sufficiently spaced from one another to permit the fixing of said dish on respectively two rigid elements (11) forming part of the frame (3) and enclosing the two discs (1) with clearance.

7. Retarder according to claim 6, characterized in that the fastening sections (11) of the dish (C) are cut out by oblong holes ($9_1$) elongated parallel with the axis of the retarder and enabling the air gaps to be adjusted during the mounting of the dish on the frame (3).

8. Retarder according to any one of claims 3 to 7, characterized in that the dish (C) has the general shape of beard plate.

9. Retarder according to any one of the preceding claims, characterized in that the two discs (1) are connected together by screwing nuts on threaded tie-rods (5) which pass through them, which screwing applies each of these discs axially against a shoulder of the shaft or against a terminal section of a ring surrounding this shaft adjacently.

10. Retarder according to claim 9, characterized in that the threaded tie-rods pass through a pulley (29) coaxial with the two discs (1) and adapted to receive a belt (28) for the transmission of the braking torque to another rotary member itself connected angularly preferably to the crank-gear (22,23) of a home trainer, said pulley being preferably arranged axially between the two discs.

11. Retarder according to claim 9, characterized in that the threaded tie-rods (5) pass through a collar (33) angularly fast to a roller (31) adapted to support the wheel (30) of a home trainer cycle.

12. Home trainer, characterized in that it is equipped with a retarder of low power according to any one of the preceding claims.

## Ansprüche

1. Elektrische Bremse geringer Leistung, mit einem induzierten Rotor, der aus zwei parallelen Scheiben (1) aus magnetischem Material zusammengesetzt ist, die mit ein und derselben Welle (2) fest verbunden sind, welche ihrerseits auf einem entsprechenden Rahmen über Kugellager (4, 35) montiert ist, und einem induzierenden Stator, der eine gerade Anzahl von zylindrischen oder prismatischen Kernen (12, 13) aus magnetischem Material aufweist, deren Erzeugende parallel zur Achse der Bremse verlaufen, wobei die Kerne derart angeordnet und elektrischen Erregermitteln derart zugeordnet sind, daß sie vor jeder der beiden Scheiben eine Reihe von elektromagnetischen Polen bilden, deren Polaritäten abwechselnd entgegengesetzt sind, wobei die Achsen der beiden Kerne jedes Paares von aufeinanderfolgenden Kernen in zwei Ebenen enthalten sind, die durch die Achse der Bremse gehen und untereinander einen Winkel zwischen 45 und 90° bilden, Grenzwerte mit eingeschlossen, dadurch gekennzeichnet, daß die Anzahl der Paare von Kernen (12, 13), welche ihr induzierender Stator aufweist, gleich 1 ist und daß dieser Stator so ausgebildet ist, daß er radial entfernbar zwischen den beiden Rotorscheiben (1) montiert werden kann.

2. Bremse nach Anspruch 1, dadurch gekennzeichnet, daß nur einer (12) der beiden Kerne von einer Spule (18) aus elektrischem Draht umgeben ist.

3. Bremse nach Anspruch 1 oder 2, dadurch gekennzeichnet, daß jeder der beiden Kerne (12, 13) den ebenen Boden (8) einer starren Schale (C) aus nichtmagnetischem Material durchsetzt und an einem seiner Enden eine vorragende Platte (16, 17) trägt, die an der Außenseite des Bodens anliegt.

4. Bremse nach Anspruch 3, dadurch gekennzeichnet, daß die Montage jedes von einer Spule umgebenen Kernes (12) am Boden (8) der Schale (C) durch Kleben der Drahtspule (18) an dem im Inneren der Schale liegenden Teil des Kernes vervollständigt wird.

5. Bremse nach den Ansprüchen 2 und 3, dadurch gekennzeichnet, daß die Montage jedes nicht von einer Spule umgebenen Kernes (13) am Boden (8) der Schale durch Anordnung eines Bügels (19) in einer Rinne dieses Kernes erfolgt.

6. Bremse nach einem der Ansprüche 3 bis 5, dadurch gekennzeichnet, daß der Rand (9) der Schale (C), der senkrecht zu ihrem Boden umgebogen ist, zwei parallele Abschnitte (10) aufweist, die ausreichend voneinander entfernt sind, um die Befestigung der Schale an zwei starren Elementen (11) zu ermöglichen, die einen Teil des Rahmens (3) bilden und die beiden Scheiben (1) mit Spiel umgeben.

7. Bremse nach Anspruch 6, dadurch gekennzeichnet, daß die Befestigungsabschnitte (11) der Schale (C) mit Langlöchern (9₁) ausgespart sind, die parallel zur Achse der Bremse verlaufen und es gestatten, die Luftspalte bei der Montage der Schale am Rahmen (3) einzustellen.

8. Bremse nach einem der Ansprüche 3 bis 7, dadurch gekennzeichnet, daß die Schale (C) die allgemeine Form eines Barbierbeckens hat.

9. Bremse nach einem der vorhergehenden Ansprüche, dadurch gekennzeichnet, daß die beiden Scheiben (1) untereinander durch Aufschrauben von Muttern auf Gewindestifte (5) verbunden sind, welche die Scheiben durchsetzen, wobei das Aufschrauben jede der Scheiben gegen eine Schulter der Welle oder gegen einen Endabschnitt eines die Welle umgebenden Ringes preßt.

10. Bremse nach Anspruch 9, dadurch gekennzeichnet, daß die Gewindestifte eine Riemenscheibe (29) durchsetzen, die koaxial zu den beiden Scheiben (1) liegt und befähigt ist, einen Riemen (28) zur Übertragung des Bremsmomentes auf ein anderes Drehorgan aufzunehmen, das seinerseits im Winkel vorzugsweise mit einem Pedal (22, 23) eines Hometrainers verbunden ist, wobei die Riemenscheibe (29) vorzugsweise axial zwischen den beiden Scheiben angeordnet ist.

11. Bremse nach Anspruch 9, dadurch gekennzeichnet, daß die Gewindestifte (5) einen Kragen (33) durchsetzen, der im Winkel mit einer Rolle (31) verbunden ist, die befähigt ist, ein Rad (30) eines Hometrainer-Fahrrades abzustützen.

12. Hometrainer, dadurch gekennzeichnet, daß er mit einer Bremse geringer Leistung nach einem der vorhergehenden Ansprüche ausgestattet ist.

FIG.2.

FIG.3.

FIG.1.

# FIG.4.

# FIG.5.

# FIG.6.

# FIG.7.